# EUROPÄISCHE PATENTSCHRIFT

(11) **EP 0 625 663 B1**
(45) Veröffentlichungstag und Bekanntmachung des Hinweises auf die Patenterteilung: **31.07.1996**
(21) Anmeldenummer: 94105511.3
(22) Anmeldetag: 09.04.1994
(51) Int. Cl.: F16L 7/00

(54) **Gleitkufenring für Rohrdurchführungen**
Skidring for pipe passages
Bague de patin pour traversées de tuyaux

(30) Priorität: 11.05.1993 DE 4315424
(43) Veröffentlichungstag der Anmeldung: 23.11.1994
(73) Patentinhaber: Göhner, Siegfried, D-72116 Mössingen (DE)
(72) Erfinder: Göhner, Siegfried, D-72116 Mössingen (DE)
(74) Vertreter: Patentanwälte Westphal, Buchner, Mussgnug Neunert, Göhring

(56) Entgegenhaltungen:
- DE-A- 3 130 599
- FR-A- 2 368 661
- US-A- 4 165 111

## Beschreibung

Die Erfindung betrifft einen Gleitkufenring gemäß Oberbegriff des Anspruchs 1.

Ein Beispiel dafür wird in US-A-4 165 111 gezeigt.

Derartige Gleitkufenringe werden benötigt, um Rohre, wie beispielsweise Gasleitungs- oder Abwasserrohre, in ein sog. Mantelrohr einführen und darin ohne metallische Berührung mit dem Mantelrohr zu haltern. Eine derartige Konfiguration wird hauptsächlich angewendet, um unterirdisch Rohre zu verlegen, ohne daß Erdarbeiten im größeren Umfang erforderlich werden. Insbesondere trifft dies zu, wenn das Aufgraben des für die Verlegung vorgesehenen Bereiches nicht oder nur unter sehr hohem Aufwand möglich ist, wie z.B. bei der Verlegung von Rohren unterhalb einer befestigten Straßendecke. Zu diesem Zweck werden jeweils am Anfangs- und am Endpunkt der Strecke Schächte gegraben und zwischen den beiden Schächten eine Bohrung gesetzt. Die Bohrung kann hierbei beispielsweise mit einem druckluftbetriebenen Werkzeug geschossen werden. In die auf diese Weise geschaffene Bohrung wird ein Mantelrohr eingelegt. Es hat die Aufgabe, die Bohrung zu stabilisieren und die eigentliche Nutzleitung aufzunehmen. Die Nutzleitung muß hierbei in das Mantelrohr eingeschoben werden. Zu diesem Zweck ist die Nutzleitung mit Gleitkufenringen versehen, die in geeignetem Abstand, beispielsweise im Abstand von einem Meter, am Außenumfang der Nutzleitung angebracht werden.

Die Gleitkufenringe bestehen in der Regel aus Polymerwerkstoffen, wie z.B. Polyethylen, die einerseits die gewünschten Gleiteigenschaften aufweisen und andererseits die Zentrierung der Nutzleitung innerhalb des Mantelrohres übernehmen. Sie verhindern zuverlässig eine metallische Berührung zwischen dem Mantelrohr und der Nutzleitung. Dies ist wichtig, um Korrosionserscheinungen zuverlässig zu vermeiden.

Bislang wurden Gleitkufenringe in Form von Halbschalen oder Viertelsegmenten hergestellt und miteinander verschraubt. Zur Verschraubung werden häufig Edelstahlschraubbolzen verwendet. Diese sind jedoch aus Korrosionsgründen nicht erwünscht. Außerdem gestaltet sich die Anbringung eines derartigen Gleitkufenrings vorort schwierig, da die Herstellung einer Schrauben/Mutternverbindung relativ arbeitsaufwendig und zudem mit den in der Regel eingesetzten Arbeitshandschuhen nicht mit der gewünschten Geschwindigkeit durchführbar ist. Schließlich muß eine hohe Zahl von Kleinteilen gehandhabt werden.

Auch sind bereits Gleitkufenringe bekanntgeworden, insbesondere solche für Rohre mit einer Nennweite von mehr als 500, die mit Vollkunststoff-Gleitkufen ausgestattet sind. Diese sind jedoch ebenfalls wenig montagefreundlich, da sie mit komplizierten Zangen oder Spannschuhen verklemmt werden müssen. Neben der relativ komplizierten Montage besteht bei diesen Gleitkufenringen die Gefahr, daß die Spannwirkung nachläßt und deshalb sich der Gleitkufenring lockert.

Der Erfindung lag deshalb das Problem zugrunde, einen Gleitkufenring der eingangs genannten Art derart weiterzuentwickeln, daß die geschilderten Nachteile nicht mehr auftreten. Insbesondere sollte der Gleitkufenring schnell und zuverlässig montierbar sein, ohne eine Vielzahl von Kleinteilen bereithalten zu müssen; auch sollte der Gleitkufenring vollständig ohne Metallteile auskommen.

Dieses Problem wird mit einem Gleitkufenring gelöst, wie er durch die Merkmale des Anspruchs 1 beschrieben ist. Vorteilhafte Weiterbildungen der Erfindung sind durch die in den Unteransprüchen wiedergegebenen Merkmale angegeben.

Die Erfindung basiert auf der Idee, einen Gleitkufenring aus einer Vielzahl deckungsgleicher Segmente aufzubauen, die einerseits die Gleitkufen tragen und andererseits Verbindungselemente aufweisen, die ein Ineinanderstecken und Miteinanderverspannen ermöglichen. Durch entsprechende Verrastung wird der Gleitkufenring lose über dem Rohr zusammengesetzt. Durch das Eintreiben eines Keils in die Verbindungsstelle zwischen zwei Segmenten werden diese aufeinander zubewegt und unter Vorspannung kraftschlüssig am Rohr gehalten. Die Montage kann somit ohne komplizierte Hilfsmittel erfolgen, da lediglich an den Verbindungsstellen Keile, beispielsweise mittels eines Hammers, einzutreiben sind. Dies erfordert relativ wenig Geschicklichkeit bei der Montage. Auch kann die Vorspannung auf einfache Weise erhöht oder nach einer Lockerung erneut aufgebaut werden.

Der erfindungsgemäße Gleitkufenring ist vollständig aus nichtmetallischen Werkstoffen aufgebaut. Gemäß einer bevorzugten Ausführungsform bestehen die Segmente aus Polyethylen und die Keile aus glasfaserverstärktem Polyamid.

Das Polyethylen bietet weiterhin den Vorteil, daß die einzelnen Segmente innerhalb gewisser Grenzen elastisch deformierbar sind. Auf diese Weise ist es nicht erforderlich, die einzelnen Segmente in ihrer Krümmung exakt auf den Durchmesser des Rohres abzustimmen. Vielmehr ist es ausreichend, die Krümmung lediglich annähernd zu gestalten. Dies erlaubt die Anpassung des Segments an Rohre unterschiedlichen Durchmessers, so daß ein großer Durchmesserbereich lediglich durch das Aneinanderfügen deckungsgleicher Segmente in der erforderlichen Zahl ermöglicht wird.

Sowohl die einzutreibenden Keile als auch die als Verbindungselemente dienenden Abschnitte der Segmente weisen Vertiefungen nach Art von Rillen oder Nuten auf, die gegenüber der Richtung, in welcher die Keile eingetrieben werden, einen spitzen Winkel von wenigen Grad aufweisen. Somit ergibt sich ein Eingriff zwischen dem Keil und dem Segment nach Art eines abgewickelten Gewindes, so daß durch das Eintreiben des Keils zwei benachbarte Segmente aufeinander zubewegt werden. Dies ermöglicht ferner eine Selbsthemmung der Verbindung, so daß kaum die Gefahr einer Lockerung besteht.

Zur Vorfixierung sind gemäß einer bevorzugten Ausführungsform Rastelemente im Verschlußbereich vorgesehen, so daß zunächst die Segmente lediglich manuell ineinandergesteckt und verrastet werden. Der noch lose Verband der einzelnen Segmente wird durch das sukzessive Eintreiben der Keile auf die gewünschte Vorspannung gebracht.

Zusätzlich können die Keile eine Sicherungsverrastung aufweisen, so daß ein versehentliches Lösen zuverlässig verhindert wird.

Zur Erleichterung der Vormontage können entfernbare Anschläge verwendet werden, die das Ineinanderstecken zweier Segmente lediglich so weit zulassen, bis die Vorverrastung anspricht. Zum Zwecke des Spannens werden die Anschläge entfernt, so daß die beiden Segmente in der gewünschten Weise ineinander verschoben werden können.

Die Erfindung wird nachstehend näher anhand der in den Figuren dargestellten Ausführungsbeispiele erläutert. In schematischer Darstellung zeigen
- Figur 1: Ausschnitt eines Gleitkufenrings,

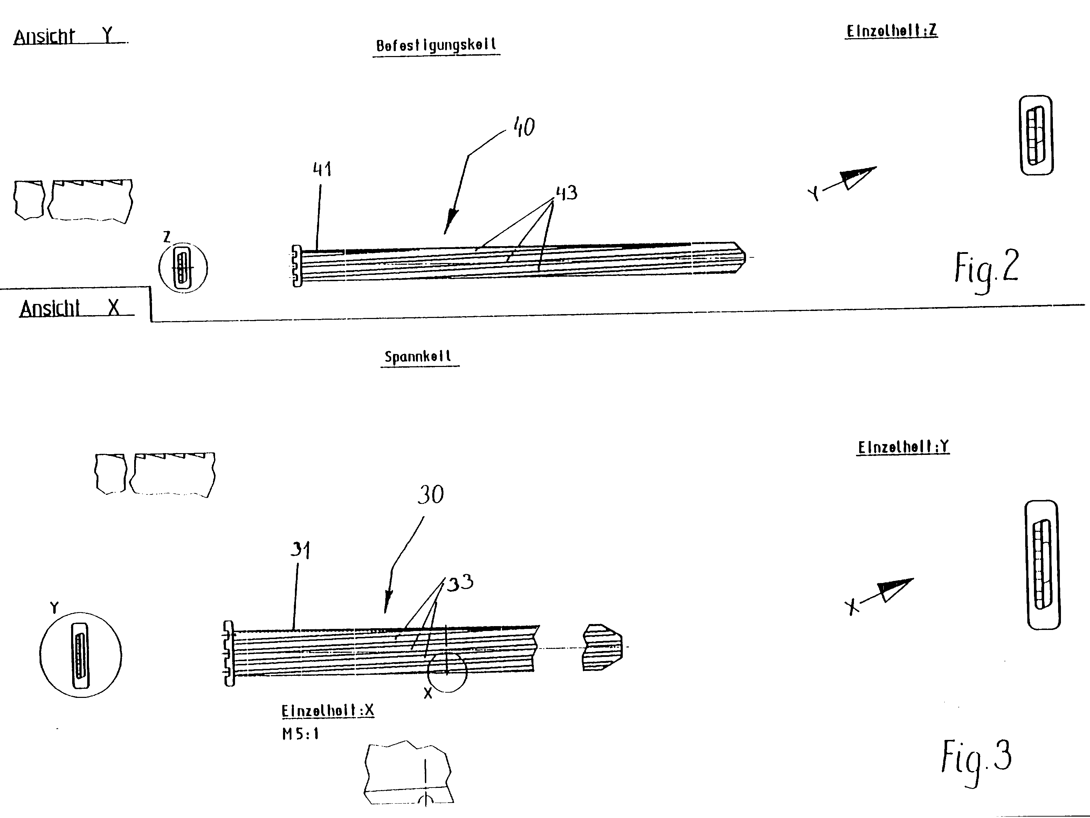

- Figur 2: einen Befestigungskeil,
- Figur 3: einen Spannkeil,

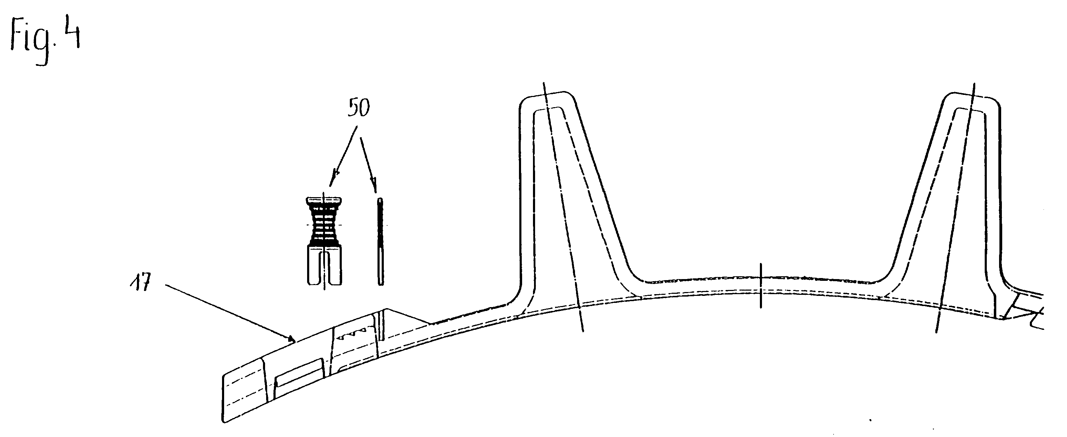

- Figur 4: Detail des Gleitkufenrings gemäß Figur 1 mit einem Anschlagbügel,
- Figur 5: Ausschnitt eines Gleitkufenrings in einer weiteren Ausführungsform und
- Figur 6: Gleitkufenring in einer weiteren bevorzugten Ausführungsform.

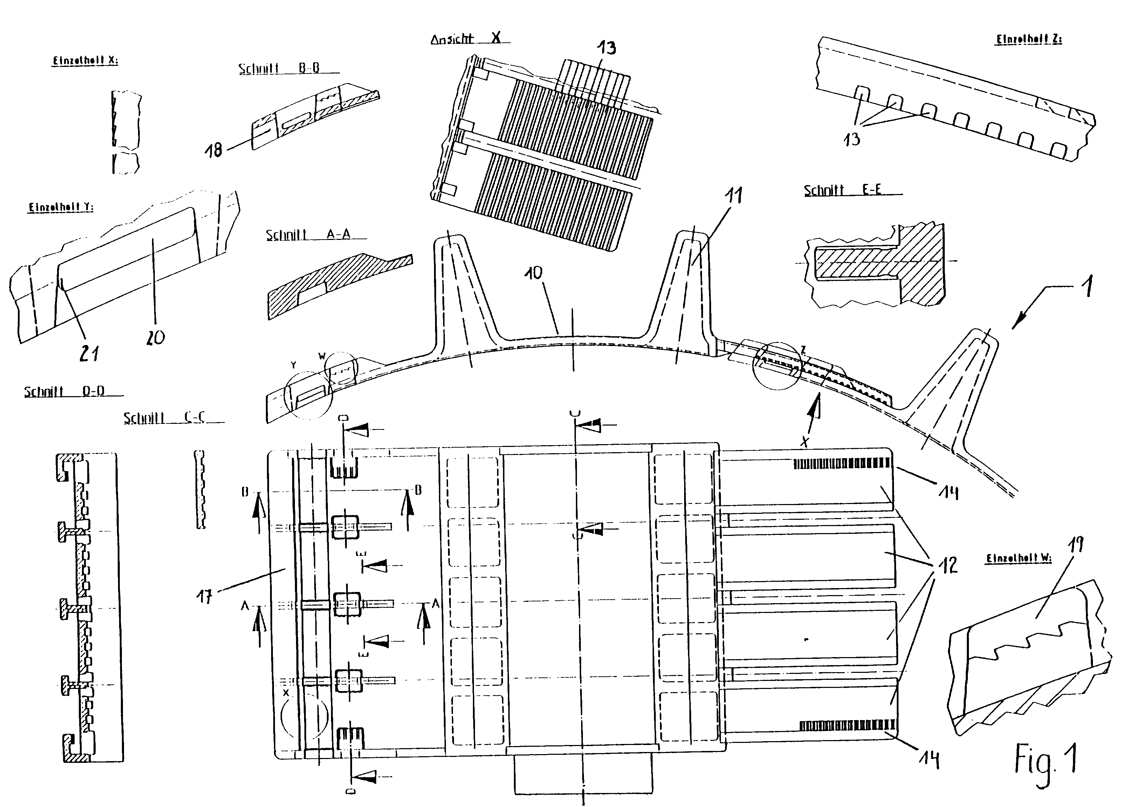

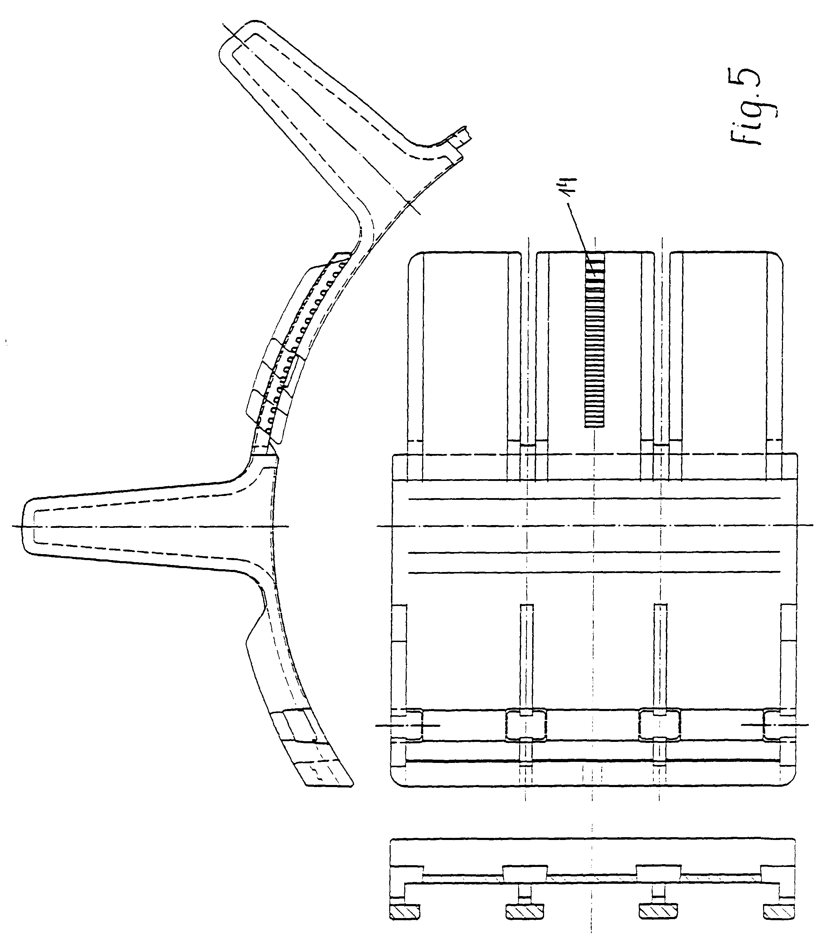

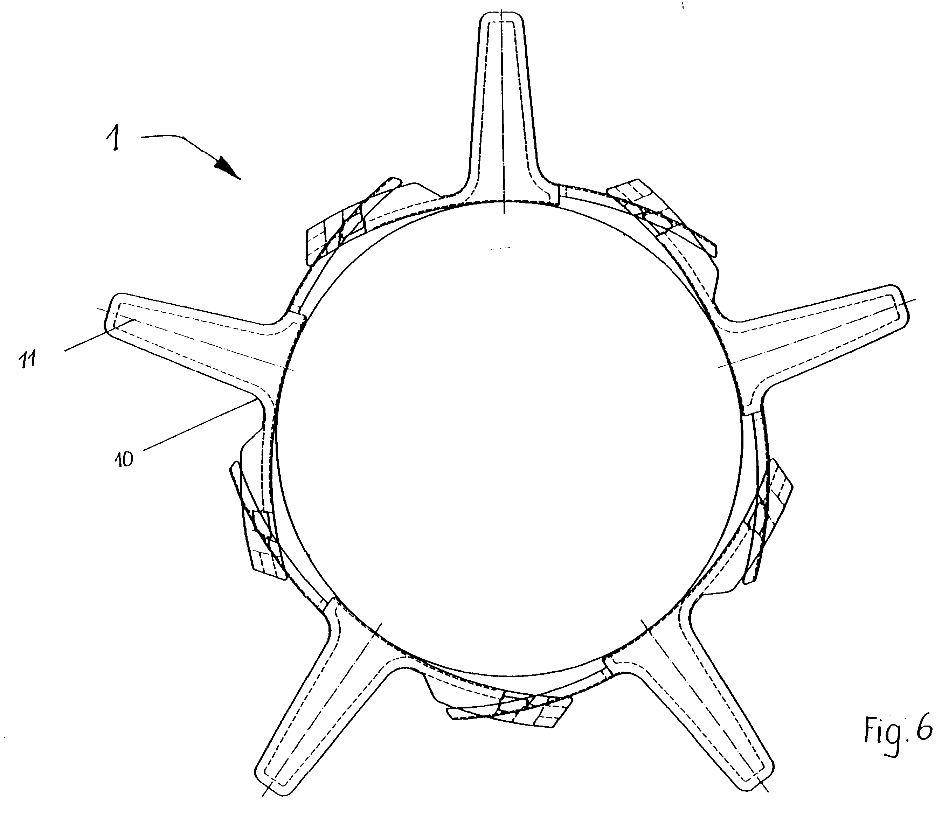

Ein Gleitkufenring 1 besteht aus mehreren deckungsgleichen Segmenten 10. Jedes Segment 10 trägt nach außen gerichtete Gleitkufen 11. Je nach Ausführungsform bzw. Durchmesser des Rohres trägt das Segment 10 einen oder mehrere, nach außen gerichtete Gleitkufen 11. Für Rohre kleinen Durchmessers werden bevorzugt Segmente 10 mit nur einer Gleitkufe 11 verwendet (Figur 5 und 6), wohingegen für Rohre größeren Durchmessers Segmente 10 zur Anwendung kommen, die zwei oder mehr Gleitkufen 11 tragen (Figur 1).

Das Segment 10 weist zur einen Seite hin einen Radialabschnitt auf, der die Form einer Lasche 12 besitzt. Im Ausführungsbeispiel gemäß Figur 1 sind vier, im Ausführungsbeispiel gemäß Figur 5 sind drei Laschen 12 vorhanden. Zur anderen Seite hin ist ein weiterer Radialabschnitt vorgesehen, der als Verschlußteil 17 konzipiert ist. Abgestimmt auf die Zahl der Laschen 12 besitzt das Verschlußteil 17 Einschuböffnungen 18, in welche die Laschen 12 eines Nachbarsegments eingeschoben werden.

Die Laschen 12 tragen an ihrer Unterseite eine Vielzahl parallel und äquidistant angeordneter Nuten 13. Diese sind nicht exakt axial ausgerichtet, sondern verlaufen in einer hiervon geringfügig abweichenden Richtung. Sie wirken mit korrespondierend gestalteten Nuten 33, 43 eines Keils 30, 40 nach Art einer abgewickelten Schrauben/Mutternverbindung zusammen. Hierzu ist am Verschlußteil 17 eine Führungsnut 20 angebracht, die in Axialrichtung verlaufend im Eingriffsbereich der Laschen 12 angebracht ist. In die Führungsnut 20 ist der Keil 30, 40 axial verschieblich geführt. Eine Verschiebung des Keils 30, 40 bewirkt somit eine radiale Verschiebebewegung der beiden benachbarten Segmente 10. Damit kann ein zunächst lose ineinandergesteckter Verband aus mehreren deckungsleichen Segmenten 10 über das Rohr geschoben bzw. um ein Rohr herum zusammengesteckt und anschließend durch das Eintreiben der Keile 30, 40 so weit unter radiale Vorspannung gesetzt werden, daß der gewünschte Kraftschluß zwischen dem Gleitkufenring 1 und dem Rohr erzielt wird. Hierbei kann durch mehrfach umlaufendes Einschlagen der Keile 30, 40 der Spannungszustand nach und nach erhöht und auf den gewünschten Wert gebracht werden.

Der gewünschte Effekt läßt sich durch die Verwendung einer einzelnen Keiltype, nämlich dem Spannkeil 30, erzielen. Dieser weist eine derartige Länge auf, so daß durch das Eintreiben in die Führungsnut 20 ein verhältnismäßig großer Verschiebeweg der beiden benachbarten Segmente 10 realisierbar ist. Es hat sich jedoch als vorteilhaft erwiesen, wenn lediglich jede zweite Verbindungsstelle mit einem Spannkeil 30 betätigt wird. Die übrigen Verbindungsstellen können mit einem Befestigungskeil 40 gesichert sein. Dieser ist kürzer als der Spannkeil 30, auch weist er weniger Nuten 43 auf. Der Befestigungskeil 40 wird jeweils vollständig axial in die Führungsnut 20 eingebracht und hält diese in der durch das vollständige Einschieben definierten Position. Die eigentliche Vorspannung wird durch das Eintreiben der Spannkeile 30 an den übrigen Verbindungsstellen erzeugt. Insbesondere bei Rohren großen Durchmessers hat sich dies bewährt, da auf dem Umfang verteilt ausreichend Verstellmöglichkeiten durch die Vielzahl der verwendeten Segmente 10 gewährleistet ist.

Die Keile 30, 40 sind seitlich mit einer sägezahnartigen Sicherungsverrastung 31, 41 versehen, die im eingetriebenen Zustand mit einer korrespondierend gestalteten Gegenverrastung 21 der Führungsnut 20 im Eingriff ist und ein versehentliches Lockern der Keile 30, 40 verhindert.

Zur Erleichterung der Vormontage, d.h. zum Aufbau des losen Verbandes, können eine oder mehrere der Laschen 14 mit Rastzähnen 14 versehen sein. Die Rastzähne 14 wirken mit Rastblöcken 19 am Verschlußteil 17 zusammen. Zur Herstellung eines losen Verbandes werden die Laschen 14 in die Einschuböffnungen 18 des Verschlußteils 17 zumindest so weit eingeschoben, bis jeweils der erste der Rastzähne 14 in den Rastblock 19 rastend eingreift und somit beide benachbarten Segmente 10 vorfixiert. Damit ist die Verbindungsstelle gesichert, kann jedoch erforderlichenfalls relativ einfach wieder gelöst werden. Zur Abstimmung auf den jeweiligen Durchmesser des Rohres können nacheinander an die Verbindungsstellen die Laschen 12 weiter in die Einschuböffnungen 18 eingeschoben und in einer beliebigen Zwischenstellung verrastet werden.

Als Einschubendanschlag für die Vormontage kann im Bereich des Verschlußteils 17 ein entfernbarer Anschlagbügel 50 eingesetzt werden. Dieser dient lediglich vorübergehend während der Dauer der Vormontage als Anschlagbegrenzung und wird nach dem Vorfixieren entfernt, so daß eine weitere Radialverschiebung der beiden Segmente 10 aufeinander zu zum Zwecke des Verspannens nicht behindert wird.

Aufbauend auf dem oben beschriebenen Grundprinzip lassen sich in naheliegender Weise weitere Varianten einer Verbindung zweier deckungsgleicher Segmente realisieren. Insbesondere die Anordnung von Nuten, Rastelementen und Keilen ist in weiten Grenzen variierbar, ohne das Grundprinzip der Erfindung zu verlassen. Insbesondere ist es auch möglich, die Verbindungsstellen kompakter dadurch zu konzipieren, daß - wie beispielsweise in Figur 6 dargestellt - der Rastblock 19 unmittelbar in die Nähe der Führungsnut 20 gerückt wird.

### Figurenlegende

- 1: Gleitkufenring

- 10: Segment
- 11: Gleitkufe
- 12: Lasche
- 13: Nut
- 14: Rastzähne
- 17: Verschlußteil
- 18: Einschuböffnung
- 19: Rastblock
- 20: Führungsnut
- 21: Gegenverrastung

- 30: Spannkeil
- 31: Sicherungsverrastung
- 33: Nut

- 40: Befestigungskeil
- 41: Sicherungsverrastung
- 43: Nut

- 50: Anschlagbügel

## Patentansprüche

1. Gleitkufenring für ein unterirdisch in einem Mantelrohr einzubringendes Rohr, beispielsweise in Form eines Gas- oder Abwasserrohrs, bestehend aus zumindest zwei Segmenten, die über Spannelemente miteinander verbunden und unter Vorspannung gegen das Rohr kraftschlüssig gedrückt gehalten sind und nach außen gerichtete Gleitkufen tragen, wobei
der Gleitkufenring (1) aus mehreren deckungsgleichen Segmenten (10) aufgebaut ist, und
jedes Segment (10) jeweils zur einen Seite hin mit einem Umfangsabschnitt in Form einer oder mehrerer Laschen (12) und - hierauf abgestimmt - zur gegenüberliegenden Seite hin ein weiterer Umfangsabschnitt in Form eines Verschlußteils (17) mit einer oder mehreren Einschuböffnungen (18) versehen ist, in welchem die Laschen (12) eines benachbarten Segments (10) im Eingriff sind,
dadurch gekennzeichnet, daß
- die Laschen (12) eine Vielzahl paralleler und äquidistant angeordneter Nuten (13) aufweisen, die gegenüber der Axialrichtung um einige wenige Winkelgrade geneigt verlaufend ausgerichtet sind und das Verschlußteil (17) im Eingriffsbereich der Laschen (12) eine axial ausgerichtete Führungsnut (20) für einen darin eingesetzten zungenförmigen Keil (30, 40) aufweist,
- der Keil (30, 40) Nuten (33, 43) besitzt, die abgestimmt auf die Nuten (13) der Laschen (12) ausgerichtet und mit diesen im Eingriff sind, und
- der Keil (30, 40) so weit axial in die Führungsnut (20) eingetrieben ist, daß jeweils die beiden benachbarten Segmente (10) miteinander verspannt sind und damit der Gleitkufenring (1) gegen das Rohr gedrückt gehalten ist.

2. Gleitkufenring nach Anspruch 1, dadurch gekennzeichnet, daß zur Vorfixierung zweier benachbarter Segmente (10) wenigstens eine der Laschen (12) an der den Nuten (13) abgewandten Seite Rastzähne (14) aufweisen, die mit Rastblöcken (19) am Verschlußteil (17) zusammenwirken.

3. Gleitkufenring nach Anspruch 1 oder 2, dadurch gekennzeichnet, daß als Einschubanschlag für die Vormontage im Bereich des Verschlußteils (17) ein entfernbarer Anschlagbügel (50) lösbar anbringbar ist.

4. Gleitkufenring nach einem der vorstehenden Ansprüche, dadurch gekennzeichnet, daß die Keile (30, 40) seitlich mit einer sägezahnartigen Sicherungsverrastung (31, 41) und die Führungsnut (20) mit einer Gegenverrastung (21) versehen sind.

## Claims

1. Skid ring for an underground pipe, for example in the form of a gas pipe or water pipe, to be introduced into a casing pipe, which skid ring comprises at least two segments which are joined together by means of clamping elements and are held pressed in a force-locked manner against the pipe under pretension and support outwardly directed skids, the skid ring (1) being made up of a plurality of congruent segments (10), and each segment (10) being provided in each case on one side with a circumferential section in the form of one or more tongues (12) and - matched thereto - a further circumferential section on the opposite side in the form of a closure part (17) having one or more insertion openings (18), in which insertion openings (18) the tongues (12) of an adjacent segment (10) are engaged,
characterized in that
- the tongues (12) have a multiplicity of parallel and equidistantly disposed grooves (13) which are aligned to extend with an inclination of a few angular degrees with respect to the axial direction, and the closure part (17) has, in the engagement region of the tongues (12), an axially aligned guide groove (20) for a tongue-shaped wedge (30, 40) inserted therein,
- the wedge (30, 40) has grooves (33,43) which are aligned so as to match the grooves (13) of the tongues (12) and are engaged with the latter, and
- the wedge (30, 40) is driven axially into the guide groove (20) to such an extent that the two adjacent segments (10) are clamped together and, consequently, the skid ring (1) is held pressed against the pipe.

2. Skid ring according to Claim 1, characterized in that, for the purpose of preliminary fixation of two adjacent segments (10), at least one of the tongues (12) has, on the side remote from the grooves (13), notches (14) which interact with latching blocks (19) on the closure part (17).

3. Skid ring according to Claim 1 or 2, characterized in that a removable stop stirrup (50) can be detachably mounted as an insert stop in the region of the closure part (17) for the preliminary assembly.

4. Skid ring according to one of the preceding claims, characterized in that the wedges (30, 40) are provided laterally with a sawtooth-like retaining notch structure (31, 41) and the guide groove (20) is provided with a mating notch structure (21).

## Revendications

1. Bague à patins pour tube à introduire sous terre dans un tuyau enveloppe, par exemple tube de gaz ou d'évacuation d'eaux usées, constituée d'au moins deux segments reliés entre eux par des éléments de serrage qui sont appliqués sous tension par liaison par la force sur le tube et qui portent des patins dirigés vers l'extérieur, bague dans laquelle :
- la bague à patins est constituée de plusieurs segments (10) à protection identique, et
- chacun d'eux présentant d'un côté une partie périphérique (1) sous la forme d'une ou plusieurs pattes (12) et, de l'autre côté et en concordance avec lui, une seconde partie périphérique ayant la forme d'une pièce de verrouillage (17) présentant une ou plusieurs ouvertures d'insertion (18) et avec laquelle viennent en prise les pattes (12) d'un segment voisin (10),
caractérisée en ce que :
- les pattes (12) portent une pluralité de rainures parallèles également espacées, inclinées de quelques degrés par rapport à la direction axiale tandis que la pièce de verrouillage (17) présente, dans la zone de prise des pattes (12) une rainure de guidage (20) à direction axiale pour introduction d'un coin (30, 40) en forme de languette,
- le coin (30, 40) présente des rainures (33, 43) orientées en concordance avec les rainures (13) des pattes (12) et en prise avec elles,
- le coin (30, 40) est enfoncé axialement dans la rainure de guidage (20) de manière à mettre en tension l'un par rapport à l'autre les deux segments voisins (10) et maintenir ainsi la bague à patins (1) appliquée sur le tube.

2. Bague à patins selon la revendication 1, caractérisée en ce que pour permettre le pré-assemblage de deux segments voisins (10) au moins une des pattes (12) porte, sur son côté opposé aux rainures (13), des dents d'arrêt (14) coopérant avec des blocs d'arrêt (19) portés par la pièce de verrouillage (17).

3. Bague à patins selon les revendications 1 ou 2, caractérisée en ce qu'il est possible d'utiliser comme butée d'insertion lors du pré-assemblage, un étrier de butée (50), externe et amovible, engagé dans la zone de la pièce de verrouillage (17).

4. Bague à patins selon une des revendications précédentes, caractérisée en ce que les coins (30, 40) portent latéralement un blocage de sécurité (31, 41) en forme de denture de scie, tandis que la rainure de guidage (20) est équipée d'une contre partie de blocage (21).
